# EUROPEAN PATENT SPECIFICATION

(11) **EP 2 305 029 B1**
(45) Date of publication and mention of the grant of the patent: **13.06.2018**
(21) Application number: 09794178.5
(22) Date of filing: 07.07.2009
(51) Int. Cl.: A01N 47/40, A01N 25/10, A01P 7/02, A01P 7/04

(54) **METHOD FOR PRODUCING EXTENDED-RELEASE PREPARATION COMPOSITION**
VERFAHREN ZUR HERSTELLUNG EINER PRÄPARATZUSAMMENSETZUNG MIT VERLÄNGERTER FREISETZUNG
PROCÉDÉ DE FABRICATION D'UNE COMPOSITION DE PRÉPARATION À LIBÉRATION PROLONGÉE

(30) Priority: 11.07.2008 JP 2008181653
(43) Date of publication of application: 06.04.2011
(73) Proprietor: Nippon Soda Co., Ltd., Tokyo 100-8165 (JP)
(72) Inventor: ENDO, Yoshihisa, Makinohara-shi Shizuoka 421-0412 (JP); NAKAMURA, Yoshio, Makinohara-shi Shizuoka 421-0412 (JP); FUKUHARA, Shinya, Takaoka-shi Toyama 933-8507 (JP)
(74) Representative: Cabinet Plasseraud
(86) International application number: PCT/JP2009/003154
(87) International publication number: WO 2010/004730

(56) References cited:
- EP-A1- 1 530 900
- EP-A1- 1 774 853
- WO-A1-97/39626
- WO-A1-2006/013972
- WO-A2-2008/006712
- GB-A- 1 288 094
- IN-A1- 188 927
- JP-A- 8 295 638
- JP-A- 63 192 702
- JP-A- 2007 031 334
- JP-A- 2007 091 716

## Description

### TECHNICAL FIELD

The present invention relates to a method of manufacture of a sustained-release formulation composition that controls release of an active ingredient, and in particular relates to a method of manufacture of a sustained-release agrochemical formulation composition that controls release of an agrochemical active ingredient.

Priority is claimed on Japanese Patent Application No. 2008-181653, filed July 11, 2008.

### BACKGROUND ART

As agrochemical formulation compositions that control release of an agrochemical active ingredient, there is, for example, known to be an agrochemical resin composition that is obtained by heating and mixing of (a) at least one type of readily water-soluble agrochemical technical product, (b) a non-water-soluble substance or poorly water-soluble substance with a melting point or softening point of 50°C or more and less than 130°C, (c) white carbon, and (d) non-ionic surfactant as necessary, where said heating and mixing is conducted at a temperature that is at or above the melting point or softening point of (b) and at or less than 130°C (see Patent Document 1).

Moreover, an agrochemical-containing resin composition is known that is composed of an agrochemical active ingredient, polyethylene, and hydrophobic silica, and that controls release of the agrochemical active ingredient. In addition, an agrochemical formulation for aqueous surface application is known which uses this agrochemical resin composition, which is capable of controlling release of the agrochemical active ingredient, and which has satisfactory floating dispersion, as well as its manufacturing method (see Patent Document 2).

There is also known to be an agrochemical resin composition which controls release of an agrochemical active ingredient by mixing the agrochemical active ingredient, poorly water-soluble resin such as styrene-maleic anhydride copolymer, and hydrophobically treated silicon oxide, and by forming a compatible state or matrix, as well as an agrochemical formulation using this (see Patent Document 3).

On the other hand, as an agrochemical formulation manufacturing method, a method is known that conducts spray drying of a wet-milled suspension containing an agrochemical active ingredient with a melting point of 55-100°C, a surfactant, and water (see Patent Document 4).
EP 1 530 900 A1 relates to pesticidal particles obtained by spray-drying.
EP 1 774 853 A1 discloses an agricultural chemical formulation which is able to control release of an agricultural chemical active ingredient.

### PRIOR ART LITERATURE

### PATENT LITERATURE

Patent Document 1: Japanese Unexamined Patent Application, First Publication No. H8- 92007
Patent Document 2: Japanese Unexamined Patent Application, First Publication No. HI 1- 315004
Patent Document 3: PCT International Publication WO 06/013972
Patent Document 4: Japanese Unexamined Patent Application, First Publication No. 2005-187452

### DISCLOSURE OF THE INVENTION

### PROBLEMS THAT THE INVENTION IS TO SOLVE

With respect to the manufacture of sustained-release formulations, kneading and granulation are conducted in order to formulate the active ingredient and other components such as resin and release control agents with a uniform matrix. However, decomposition of the active ingredient may occur due to influences on the stringent conditions of these formulation processes, for example, on pressure and shear force in the kneading process, thermal history in the drying process, and so forth.

When the active ingredient decomposes, not only is there a decline in performance as a formulation, but problems also arise with respect to manufacturing stability and cost. Consequently, there is a need for a manufacturing method in which decomposition of the active ingredient does not occur, and which enables reliable removal of solvents and the like.

That is, the object of the present invention is to offer a method for stably and efficiently manufacturing a sustained-release formulation composition.

### MEANS FOR SOLVING THE PROBLEMS

As a result of diligent study aimed at solving the aforementioned problems, the present inventors discovered that by spray drying the formulation composition using a spray dryer, and by controlling exit temperature in the pertinent drying, it is possible to manufacture a sustained-release formulation composition which has low solvent content in the formulation composition after drying, and which does not substantially contain decomposed matter of the active ingredient.

That is, the present invention is as defined in the set of claims. The following items are described:
[1] relates to a method of manufacture of sustained-release formulation composition which includes a step of spray drying a composition that contains (1) an active ingredient, (2) a resin ingredient, and (3) a solvent, using a spray dryer and controlling the exit temperature of the spray dryer, wherein solvent content in the composition after spray drying is 5 mass % or less, and the composition after the aforementioned spray drying does not substantially contain decomposed matter of the aforementioned active ingredient;
[2] relates to the method of manufacture of sustained-release formulation composition recorded in [1], wherein the aforementioned composition further contains (4) a release control agent;
[3] relates to the method of manufacture of sustained-release formulation composition recorded in [1], wherein the aforementioned (1) active ingredient is an agrochemical active ingredient (acetamiprid);
[4] relates to the method of manufacture of sustained-release formulation composition recorded in [1], wherein the aforementioned (1) active ingredient is acetamiprid;
[5] relates to the method of manufacture of sustained-release formulation composition recorded in [2], wherein the aforementioned (1) active ingredient is acetamiprid, the aforementioned (2) resin ingredient includes at least one type of styrene-maleic anhydride copolymer and derivative thereof, and the exit temperature of the aforementioned spray dryer is 56-64°C;
[6] relates to the method of manufacture of sustained-release formulation composition recorded in [5], wherein the aforementioned (2) resin ingredient further includes at least one polymer selected from a group of polymers which have repeating units of rosin and derivative thereof, as well as salicylic acid and derivative thereof;
[7] relates to the method of manufacture of sustained-release formulation composition recorded in [2], wherein the aforementioned (4) release control agent is a water-soluble polymer, silicon oxide, or surfactant;
[8] relates to the method of manufacture of sustained-release formulation composition recorded in [7], wherein the aforementioned silicon oxide is hydrophobic white carbon;
[9] relates to the method of manufacture of sustained-release formulation composition recorded in [1], wherein average particle size of the composition after the aforementioned spray drying is 100 µm or less;
   Furthermore, the present invention:
   [10] relates to a sustained-release formulation composition that is manufactured by the method of manufacture recorded in any of the aforementioned [1]-[9].

### EFFECTS OF THE INVENTION

According to the manufacturing method of the present invention, even with respect to formulation compositions containing an active ingredient (acetamiprid) that is susceptible to decomposition, it is possible to obtain formulation compositions that do not produce decomposed matter and that have low solvent content. Consequently it is possible to stably and efficiently manufacture a sustained-release formulation composition.

### BEST MODE FOR CARRYING OUT THE INVENTION

### (Active ingredient)

The active ingredient of the present invention is acetamiprid. The following may be cited as such agrochemical active ingredients.

### Bactericides:

Coppering agents: basic copper chloride, basic copper sulfate, and the like.
   Sulfur agents:thiram, zineb, maneb, mancozeb, ziram, propineb, polycarbamate, and the like.
   Polyhaloalkylthio agents: captan, folpet, dichlofluanid, and the like.
   Organochlorine agents: chlorothalonil, phthalide, and the like.
Organophosphate agents: IBP, EDDP, triclofosmethyl, pyrazophos, fosetyl, and the like.
Benzimidazole agents: thiophanate methyl, benomyl, carbendazim, thiabendazole, and the like.
Dicarboximide agents: iprodione, procymidone, vinclozolin, fluoroimide, and the like.
Carboxamide agents: oxycarboxine, mepronil, flutolanil, tecloftalam, trichlamide, pencycuron, and the like.
Acylalanine agents: metalaxyl, oxadixyl, furalaxyl, and the like.
Methoxyacrylate agents: kresoxim-methyl, azoxystrobin, metominostrobin, and the like.
Anilinopyrimidine agents: andopurine, mepanipyrim, pyrimethanil, diprodinyl, and the like.
SBI agents: triadimefon, triadimenol, bitertanol, myclobutanil, hexaconazol, propiconazol, triflumizole, prochloraz, pefrazoate, fenarimol, pyrifenox, triforine, flusilazole, etaconazole, diclobutrazole, fluotrimazole, flutriafen, penconazole, diniconazole, imazalyl, tridemorph, fenpropimorph, buthiobate, epoxyconazole, metoconazole, and the like.
Antibiotics: polyoxin, blastocidin-S, kasugamycin, balidamycin, dihydrostreptomycin sulfate, and the like.
Others: propamocarbhydrochloride, quintozene, hydroxyisoxazole, metasulfocarb, anilazine, isoprothiolane, probenazole, quinomethionate, dithianone, dinocap, diclomezine, ferimzone, fluazinam, pyroquilon, tricyclazole, oxolinic acid, dithianone, iminoctadine acetate, cymoxanil, pyrrolenitrine, metasulfocarb, diethofencarb, binapacryl, lecithin, sodium bicarbonate, fenaminosulf, dodine, dimetomorph, fenazine oxide, carpropamide, flusulfamide, fludioxonil, famoxadone, and the like.

### Insecticides and acaricides:

Organophosphorous and carbamate insecticides: fenthion, fenitrothion, diazinon, chlorpyrifos, ESP, bamidothion, fenthoate, dimethoate, formothion, malathon, trichlorfon, thiometon, phosmet, dichlorvos, acephate, EPBP, methyl parathion, oxadimeton methyl, ethion, salithion, cyanophos, isoxathione, pyridafenthion, phosalone, methidathion, sulprofos, chlorfevinphos, tetrachlorvinphos, dimethylvinphos, propaphos, isofenphos, ethyl thiometon, profenophos, pyraclofos, monocrotophos, azinphosmethyl, aldicarb, methomyl, thiodicarb, carbofuran, carbosulfan, benflacarb, flathiocarb, propoxur, BPMC, MTMC, MIPC, carbaryl, pyrimicarb, ethiofencarb, fenoxycarb, and the like.
Pyrethroid insecticides: permethrin, cypermethrin, deltamethrin, fenvalerate, fenpropathrin, pyrethrin, allethrin, tetramethrin, resmethrin, dimethrin, propathrin, fenothrin, prothrin, fluvarinate, cyfluthrin, cyhalothrin, flucythrinate, ethofenprox, cycloprothrin, tralomethrin, silafluofen, brofenprox, acrinathrin, and the like.
Benzoyl urea and other insecticides: diflubenzuron, chlorfluazuron, hexaflumuron, triflumuron, fulfenoxuron, flucycloxuron, buprofezin, pyriproxyfen, methoprene, benzoepin, diafenthiuron, acetamiprid, imidacloprid, nitenpyram, fipronyl, cartap, thiocyclam, bensultap, nicotin sulfate, rotenone, metaldehyde, machine oil, microbial insecticides such as BT and insect-pathogenic viruses, pheromones, and the like.

Nematicides: fenamiphos, fosthiazate, and the like.
Acaricides: chlorbenzilate, fenisobromolate, dicofol, amitraz, BPPS, benzomate, hexythiazox, fenbutatin oxide, polynactin, quinomethionate, CPCBS, tetradifon, avermectin, milbemectin, clofentezin, cyhexatin, pyridaben, fenpyroxymate, tebufenpyrad, pyrimidifen, fenothiocarb, dienochlor, and the like.

### Plant growth regulators:

gibberellins (e.g., gibberellin A3, gibberellin A4, gibberellin A7), IAA, NAA, and the like.

### Herbicides:

Anilide herbicides: diflufenican, propanil, and the like.
Chloroacetoanilide herbicides: alachlor, pretilachlor, and the like.
Aryloxyalkanoic acid herbicides: 2,4-D, 2,4-DB, and the like.
Aryloxyphenoxyalkanoic acid herbicides: diclofop-methyl, fenoxaprop-ethyl, and the like.
Arylcarboxylic acid herbicides: dicamba, pyrithiobac, and the like
Imidazoline herbicides: imazaquin, imazethapyr, and the like.
Urea herbicides: diuron, isoproturon, and the like.
Carbamate herbicides: chlorpropham, phenmedipham, and the like.
Thiocarbamate herbicides: thiobencarb, EPTC, and the like.
Dinitroaniline herbicides: trifluralin, pendimethalin, and the like.
Diphenyl ether herbicides: acifluorfen, fomesafen, and the like.
Sulfonylurea herbicides: bensulfuron-methyl, nicosulfuron, and the like.
Triazinone herbicides: metribuzin, metamitron, and the like.
Triazine herbicides: atrazine, cyanazin, and the like.
Triazopyrimidine herbicides: flumetsulam, and the like.
Nitrile herbicides: bromoxinil, dichlobenil, and the like.
Phosphoric acid herbicides: glyphosate, glufosinate, and the like.
Quaternary ammonium salts herbicides: paraquat, difenzoquat, and the like.
Cyclic imide herbicides: flumiclorac-pentyl, fluthiacet-methyl, and the like.
Benzoylaminopropionic acid herbicides: benzoylprop-ethyl, furanprop-ethyl, and the like.
Other herbicides: isoxaben, ethofumesate, oxadiazon, piperophos, daimuron, bentazone, benfuresate, difenzoquat, naproanilide, triazophenamide, quinchlorac, clomazone, sulcotrione, cinmethylin, dithiopyr, pyrazolate, pyridate, flupoxam, as well as cyclohexanedione herbicides such as sethoxydim, tralkoxydim, and the like.

Synergists / antidotes: octachlorodipropyl ether, piperonyl butoxide, cyneprin, IBTA, benoxacor, cloquintocet-methyl, cyometrinil, dichlormid, fenchlorazole-ethyl, fenclorim, flurazole, flaxofenimi, furilazole, mefenpyr-diethyl, MG191, naphthalic anhydride, oxabetrinil, neonicotinoid-based compounds, and the like.

Antibacterial / antifungal / antialgae agents: trialkyltriamine, ethanol, isopropyl alcohol, propyl alcohol, trisnitro methane, chlorobutanol, pronopol, glutaraldehyde, formaldehyde, α-bromcinnamaldehyde, scane M-8, caisson CG, BIT, n-butyl BIT, allyl isothiocyanate, thiabendazole, methyl 2-benzimidazolyl carbamate, lauricidine, biovan, triclocarban, halocarban, glasisicar, benzoic acid, sorbic acid, caprylic acid, propionic acid, 10-undecylenic acid, potassium sorbate, potassium propionate, potassium benzoate, mono magnesium phthalate, zinc undecylenate, 8-hydroxyquinoline, copper quinoline, TMTD, triclosan, dichlohelanilide, tolyfluanid, milt protein, egg white lysozyme, benthiazole, sodium carbam, triazine, tebuconazole, hinokithiol, tetrachloroisophthalonitrile, chlorhexidine gluconate, chlorhexidine hydrochloride, polyhexamethylene biguanide, polybiguanide hydrochloride, dantobrom, clidant, sodium pyrithion, zinc pyrithion, densil, kappa-pyrithion, thymol, isopropyl methyl phenol, OPP, phenol, butyl paraben, ethyl paraben, methylparaben, propyl parapen, metacresol, orthocresol, paracresol, sodium orthophenyl phenol, chlorofen, parachlorophenol, parachloromethaxylate, parachlorocresol, fluorfolpet, polylysine, Jote methylparatolyl sulfone, polyvinyl pyrrolidone parachloroisocyanel, hydrogen peroxide, stabilized chlorine dioxide, peracetic acid, copper naphthenate, silver chloride, titanium oxide, silver, zinc-calcium phosphate, Silver Ace, silver-zinc aluminosilicate, silver-zinc zeolite, phorone killer, penzalkonium chloride, didecyl dimethyl ammonium chloride, benzotonium chloride, cetylammonium bromide, Cetrimide, CTAB, Cetavlon, penzalkonium chloride, cetyl pyridinium chloride, chitosan, diuron, DCMU, prepentol A6, CMI, 2CI-OIT, BCM, ZPT, BNP, OIT, IPBC, TCMSP, and the like.

### (Resin ingredient)

The resin ingredient of the present invention includes at least one type of styrene-maleic anhydride copolymer and derivative thereof which is obtained by esterification by alcohol. As the "resin ingredient" as described herein, there are no particular limitations provided that it does not change in reaction with the aforementioned active ingredient, and provided that it can be uniformly mixed by kneading, dissolution, or the like. One may cite, for example, polymers which have repeating units of styrene-maleic anhydride copolymer and derivative thereof, rosin and derivative thereof, and salicylic acid and derivative thereof, as well as poly(meth)acrylic acid, polyacrylamide, polystyrene sulfonic acid, poly-2-hydroxymethacrylic acid, and the like, alone or in mixtures.

For example, in the case where the active ingredient is acetamiprid, the resin ingredient may suitably contain styrene-maleic anhydride copolymer or its derivative. As ingredients other than styrene-maleic anhydride copolymer and its derivative, polymers with repeating units of rosin or its derivative or salicylic acid or its derivative are particularly preferable. These ingredients other than styrene-maleic anhydride copolymer and its derivative may contain a single type or two or more types of ingredient.

As the styrene-maleic anhydride copolymer derivative as described herein, one may specifically cite derivatives obtained by esterification by alcohol, sulfonation by sulfonating agents, or imidification by amine, as well as types obtained by further neutralizing an esterified derivative, and the like. In particular, those obtained by esterification by alcohol may be preferentially cited. Moreover, there are no particular limitations on the polymer configuration of the styrene-maleic anhydride copolymer, and one may use polymers of any configuration of random, block, or graft.

As ingredients other than styrene-maleic anhydride copolymer and its derivative, from the standpoint of compatibility and release controllability relative to acetamiprid which is the agrochemical active ingredient, one may preferentially cite polymers that have repeating units of rosin derivative or salicylic acid derivative.

Rosin derivative indicates derivatives of abietic acid which is the primary component of pine resin, and one may specifically cite tall rosin, rosin-modified phenol, rosin-modified maleic acid, and so on.

A polymer with repeating units of salicylic acid or its derivative may also contain other structures as repeating units, provided that it contains salicylic acid or its derivative as a constituent unit in the polymer. Specifically, one may cite polymers in which salicylic acid of two molecules or more of the same type or two types or more are condensed, polymers in which salicylic acid and another hydroxycarboxylic acid are condensed, and the like. More specifically, one may cite linear polysalicylate manufactured by Poviron Co.

As for the mixing proportions of the employed mixed resin, one may specifically cite mixed resin that contains 30-99 weight % of styrene-maleic anhydride copolymer, and 1-70 weight % of at least one type of polymer with repeating units of rosin and its derivative as well as salicylic acid and its derivative. More preferably, one may cite a range wherein the former is 50-99 weight %, and the latter is 1-50 weight %.

As resins that may be used that are other than polymers with repeating units of rosin or its derivative, or salicylic acid or its derivative, one may specifically cite polyolefin resin, poly(meth)acrylic resin, polystyrene resin, polyester resin, polyvinyl chloride resin, polyvinylidene chloride resin, polyamide resin, polyacetal resin, polycarbonate resin, polyurethane resin, and the like.

As polyolefin resins, one may specifically cite polyethylene resins used as ordinary molding resin such as low-density polyethylene, medium-density polyethylene, high-density polyethylene, polyethylene wax, and ethylene-a oleate copolymer elastomer; ethylene-vinyl acetate copolymer, ethylene-(meth)acrylate copolymer, polypropylene, propylene-ethylene copolymer, ethylene-propylene copolymer, polybden, ethylene-propylene-butadiene copolymer, and the like.

As poly(meth)acrylic resin, one may specifically cite, for example, not only methyl methacrylate homopolymer, but also (meth)acrylic copolymers that respectively copolymerize ethylene, styrene, α-methyl styrene, acrilonitrile, and the like to ester acrylate or ester methacrylate; impact-resistant (meth)acrylic resin that copolymerizes butadiene, styrene, and acrilonitrile to ester (meth)acrylate; and the like.

Polystyrene resin may be specifically exemplified not only, for example, by styrene homopolymer used as ordinary molding resin, but also by high impact polystyrene (HIPS), methyl methacrylate-butadiene-styrene copolymer, styrene-maleic anhydride copolymer, styrene-(meth)acrylate copolymer, styrene-acrylonitrile copolymer, and the like.

Polyester resin may be specifically exemplified by aromatic polyesters such as polyethylene terephthalate, polybutylene terephthalate, and polyethylene naphthalate; and also by polyesters obtained by condensing dicarboxylic acid and diols used in paint resin and the like; and so on. Among these, one may preferentially cite aliphatic polyester obtained by polycondensation of dicarboxylic acid and aliphatic diol.

Among these, one may cite biodegradable resins such as polyhydroxyalkanoate copolymers typified by 3-hydroxybutylate 3-hydroxyvarylate copolymer; or homopolymers based on single hydroxyalkanoates typified by polylactic acid; polycaprolactone; copolymers of polylactic acid and polyester; and the like.

Polyvinyl chloride resin may be specifically exemplified, not only, for example, by vinyl chloride homopolymer, but also by the respective copolymers of vinyl chloride with ethylene, propylene, acrylonitrile, vinylidene chloride, vinyl acetate, and the like.

### (Solvent)

As the solvent used in the method of the present invention, there are no particular limitations provided that it can dissolve or disperse the employed active ingredient, resin ingredient, and release control agent, and provided that it can be removed at a spray drying temperature that does not cause decomposition of the active ingredient. Specifically, one may cite alcohols such as methanol, ethanol, isopropyl alcohol, 2-butanol, and t-butanol; ethers such as diethyl ether, ethylene glycol dimethyl ether, tetrahydrofuran, and dioxane; esters such as ethyl acetate and butyl acetate; ketones such as acetone, methylethyl ketone, methylisobutyl ketone, and cyclohexane; aromatic or aliphatic hydrocarbons such as xylene, toluene, alkyl naphthalene, phenylxylyl ethane, kerosene, light oil, hexane, and cyclohexane; halogenated hydrocarbons such as chlorobenzene, dichloromethane, dichloroethane, and trichloroethane; and so on. Among these, low-boiling point solvents with a boiling point of 100°C or less are preferable, and one may preferentially cite dichloromethane, acetone, and methanol.

### (Release control agent)

The control release agent of the present invention is a water soluble polymer, silicon dioxide, or surfactant. As the release control agent as described herein, there are no particular limitations, provided that it accelerates or inhibits the amount of release of an active ingredient from a composition in a compatible state or matrix state, and enables control of release. Specifically, one may cite water-soluble macromolecules, silicon oxide, or surfactants and the like. It should be noted that these compounds may also be effective as antistatic agents in the spray drying process.

Water-soluble macromolecules may be specifically exemplified by naturally derived macromolecules such as starch and gelatin; semi-synthetic cellulose derivative such as carboxymethyl cellulose, methyl cellulose, and hydroxypropyl cellulose; or synthetic ones such as polyvinyl alcohol, polyacrylate polymer, polyacrylamide, and polyethylene glycol.

Silicon oxide may be specifically exemplified by white carbon and the like. More specifically, it may be exemplified by ordinary white carbon, calcined white carbon hydrophobic white carbon, and the like. Ordinary white carbon is the collective term for amorphous silicon dioxide composed of SiO₂, and is divided according to differences in manufacturing method into precipitated silica and fumed silica. Calcined white carbon is white carbon whose surface silanol groups have been hydrophobized by treating ordinary white carbon at high temperature. Among these, hydrophobized white carbon is particularly preferable.

With respect to surfactants, there are no particular limitations provided that they can be used in ordinary agrochemical formulations, pharmaceutical formulations, veterinary drug formulations, and the like. Specifically, non-ionic surfactants may be exemplified by sugar ester surfactants such as sorbitan fatty acid ester (C₁₂₋₁₈), POE sorbitan fatty acid ester (C₁₂₋₁₈), sucrose fatty acid ester, and the like; fatty acid ester surfactants such as POE fatty acid ester (C₁₂₋₁₈), POE resin acid ester, POE fatty acid diester (C₁₂₋₁₈); alcohol surfactants such as POE alkyl ether (C₁₂₋₁₈); alkyl phenol surfactants such as POE alkyl (C₈₋₁₂) phenyl ether, POE dialkyl (C₈₋₁₂) phenyl ether, and POE alkyl (C₈₋₁₂) phenyl ether formalin condensate; polyoxyethylene-polyoxypropylene block polymer surfactants such as polyoxyethylene-polyoxypropylene block polymers, and alkyl (C₁₂₋₁₈) polyoxyethylene-polyoxypropylene block polymer ethers; alkylamine surfactants such as POE alkylamine (C₁₂₋₁₈) and POE fatty acid amide (C₁₂₋₁₈); bisphenol surfactants such as POE fatty acid bisphenyl ether; multi-aromatic ring surfactants such as POA benzyl phenyl (or phenyl phenyl) ether and POA styryl phenyl (or phenyl phenyl) ether; silicon or fluorine surfactants such as POE ether and ester silicon and fluorine surfactants; and plant oil surfactants such as POE castor oil and POE hardened castor oil. Anionic surfactants may be exemplified by sulfate surfactants such as alkyl sulfate (C₁₂₋₁₈, Na, NH₄, alkanolamine), POE alkylether sulfate (C₁₂₋₁₈, Na, NH₄, alkanolamine), POE alkylphenyl ether sulfate (C₁₂₋₁₈, Na, NH₄, alkanolamine, Ca), POE benzyl (or styryl) phenyl (or phenyl phenyl) ether sulfate (Na, NH₄, alkanolamine), polyoxyethylene, and polyoxypropylene block polymer sulfate (Na, NH₄, alkanolamine); sulfonate surfactants such as paraffin (alkane) sulfonate (C₁₂₋₂₂, Na, Ca, alkanolamine), AOS(C₁₄₋₁₆, Na, alkanolamine), dialkyl sulfosuccinate (C₈₋₁₂, Na, Ca, Mg), alkyl benzene sulfonate (C₁₂, Na, Ca, Mg, NH₄, alkylamine, alkanol, amine, cyclohexylamine), mono- or dialkyl (C₃₋₆) naphthalene sulfonate (Na, NH₄, alkanolamine, Ca, Mg), naphthalene sulfonate-formalin condensate (Na, NH₄), alkyl (C₈₋₁₂) diphenyl ether disulfonate (Na, NH₄), lignin sulfonate (Na, Ca), POE alkyl (C₈₋₁₂) phenyl ether sulfonate (Na), and POE alkyl (C₁₂₋₁₈) ether half ester sulfosuccinate (Na); and phosphate surfactants such as carboxylic fatty acid salt (C₁₂₋₁₈, Na, K, NH₄, alkanolamine), N-methyl-fatty acid sarcosinate (C₁₂₋₁₈, Na), resin acid salt (Na, K), POE alkyl (C₁₂₋₁₈) ether phosphate (Na, alkanolamine), POE mono- or dialkyl (C₈₋₁₂) phenyl ether phosphate (Na, alkanolamine), POE benzylated (or styrylated) phenyl (or phenyl phenyl) ether phosphate (Na, alkanolamine), polyoxyethylene-polyoxypropylene block polymer (Na, alkanolamine), phosphadyl choline-phosphadyl ethanol amine (lecithin), and alkyl (C₈₋₁₂) phosphate. Cationic surfactants may be exemplified by ammonium surfactants such as alkyl trimethyl ammonium chloride (C₁₂₋₁₈), methyl-polyoxyethylene-alkyl ammonium chloride (C₁₂₋₁₈), alkyl N-methyl pyridium bromide (C₁₂₋₁₈), mono-dialkyl (C₁₂₋₁₈) methylated ammonium chloride, and alkyl (C₁₂₋₁₈) pentamethyl propylene diamine dichloride; and benzalkonium surfactants such as alkyl dimethyl benzalkonium chloride (C₁₂₋₁₈) and benzethonium chloride (octylphenoxy ethoxy ethyl dimethyl benzyl ammonium chloride). Ampholytic surfactants may be exemplified by betaine surfactants such as dialkyl (C₈₋₁₂) diamino ethyl betaine and alkyl (C₁₂₋₁₈) dimethyl benzyl betaine; glycine surfactants such as dialkyl (C₈₋₁₂) diamino ethyl glycine and alkyl (C₁₂₋₁₈) dimethyl benzyl glycine. These may be used alone or in mixtures of two or more.

### (Spray drying)

The method as described herein spray dries a composition containing the aforementioned ingredients using a spray dryer.

The spray dryer may be appropriately selected according to the constitution of the manufactured composition and the amount to be manufactured. Specifically, one may cite, for example, Spray Dryer SD-1 manufactured by Tokyo Rikakikai Co., Ltd., and Spray Dryer L/OC Series manufactured by Okawara Kakoki Co., Ltd.

The spray drying conditions may be appropriately set according to the constitution of the manufactured composition, the apparatus to be used in spray drying, and the like. In order to dry organic solvents such as acetone, spray drying is conducted by spraying with use of a mixed gas of nitrogen and air that is below the explosion limit of the drying solvent, and by controlling the exit temperature.

The exit temperature is the temperature of the mixed gas of nitrogen and air that is contained in a sample that transits the exit of the spray dryer, that is, the pipe portion in front of the cyclone collector. A temperature sensor is installed within the pipe, the temperature of the mixed gas is detected, and control is automatically or manually conducted to obtain an exit temperature that is set.

In particular, the exit temperature of the spray dryer is set to 56-64°C in the case where one spray dries a composition which contains acetamiprid, styrene-maleic anhydride copolymer or resin mixture containing styrene-maleic anhydride copolymer, solvent, and a release control agent.

With respect to the concentration (composition of the ingredients other than solvent) of the composition prior to spray drying, when excessively dilute, particle size control during spraying is easy, but drying efficiency is poor; when excessively dense, drying efficiency is satisfactory, but particle size control during spraying is difficult. Consequently, it is preferable to set the proportion of ingredients other than solvent at 20 weight % to 70 weight %, and 30 weight % to 60 weight % is more preferable.

### (Sustained-release formulation composition)

A sustained-release formulation signifies a formulation whose active ingredient is not quickly released, but rather gradually released, and whose effects are sustained. Specifically, one may cite, for example, sustained-release agrochemical formulations, sustained-release pharmaceutical formulations, sustained-release veterinary drug formulations, and the like.

A sustained-release formulation composition may be the aforementioned sustained-release formulation itself, or a manufacturing intermediate product.

A characteristic of the sustained-release formulation composition manufactured by the method as described herein is that the composition containing the aforementioned ingredients is formed in a compatible state or a matrix. A compatible state or matrix signifies that the active ingredients are in a dissolved or dispersed state in resin which is not discontinuous (which is continuous phase).

The mixing proportions of the respective ingredients may be set at one's discretion in order to optimize the sustained-release properties of the active ingredient, and there are no particular limitations, but it is preferable to have a range where the active ingredient is 1 weight % to 80 weight %, the resin ingredient is 19 weight % to 98 weight %, and the release control agent and the remainder are 1 weight % to 80 weight %; and a range where the active ingredient is 10 weight % to 50 weight %, the resin ingredient is 45 weight % to 85 weight %, and the release control agent and the remainder are 5 weight % to 50 weight % is more preferable.

The concentration of the aforementioned composition in a solvent-containing state prior to spray drying is 20 weight % to 70 weight %, and preferably 30 weight % to 60 weight %. That is, prior to spray drying, the solvent is in a range relative to the overall composition of 30 weight % to 80 weight %, and preferably 40 weight % to 70 weight %.

With respect to the sustained-release formulation composition manufactured by the method of the present invention, solvent content in the composition after spray drying is 5 mass % or less, and if necessary, it may be set to 3% or less, and even to 1% or less.

In addition, the sustained-release formulation composition manufactured by the method of the present invention does not substantially contain decomposed matter of the active ingredient.

"... does not substantially contain decomposed matter of the active ingredient" signifies that decomposed matter of the active ingredient is not contained in the composition after spray drying, or is not detected by analysis, or even if contained, does not affect the physical properties or performance of the composition. Specifically, for example, one may cite the case where a prescribed quantity of spray dried product is dissolved or dispersed in acetonitrile, and the decomposed matter detected by HPLC (High Performance Liquid Chromatography) analysis under prescribed conditions is at or below the detection limit.

Apart from the aforementioned ingredients, one may add as necessary to the sustained-release formulation composition manufactured by the manufacturing method as described herein the following: inorganic salts such as calcium carbonate, potassium chloride, and sodium sulfate; organic acids and their salts such as citric acid, malic acid, fumaric acid, and stearic acid; sugars such as lactose and sucrose; inorganic additives such as alumina powder, silica gel, zeolite, hydroxy apatite, zirconium phosphate, titanium phosphate, titanium oxide, zinc oxide, hydrotalcite, kaolinite, montmorillonite, talc, and clay; antioxidants such as n-propyl gallate and butylhydroxyanisole; pH adjusters and buffer agents such as sodium tripolyphosphate, sodium dihydrogen phosphate, and ammonium phosphate; colorants such as brilliant blue FCF, methylene blue, and pigment red 48; as well as preservatives, lubricants, ultraviolet absorbers, antistatic agents, and so on.

Average particle size of the sustained-release formulation composition manufactured by the method as described herein may variously differ according to the purpose of use, and is not limited. For example, a range of 200 µm or less for use as a sustained-release agrochemical formulation composition is preferable, and a range of 10-100 µm is particularly preferable. Moreover, it is possible to regulate the release speed of the agrochemical active ingredient by using a combination of two types or more of the agrochemical formulation composition of the present invention with different particle sizes and compositions.

The sustained-release formulation composition manufactured by the method of the present invention may be used as a product (sustained-release formulation) without alteration, or it may be made into a final product after the spray drying process of the present invention by further subjecting the sustained-release formulation composition obtained by the method of the present invention to additional grain refinement and granulation by methods such as disintegration and sifting.

For example, after the spray drying process of the present invention, drying may be further conducted. There are no particular limitations on drying methods within the scope of purpose of the present invention. For example, one may cite, among others, conical dryers, circulating hot air dryers, and infrared heating units, but one is not limited thereto, although dryers that enable drying at low temperature are preferable.

Moreover, it is also acceptable to further conduct pulverization after the spray drying process of the present invention. As pulverizers, one may cite, for example, ball mills (manufactured by Kurimoto, Ltd.), vertical jet mills (manufactured by Seishin Enterprise Co., Ltd.), planetary ball mills (manufactured by Seishin Enterprise Co., Ltd.), vibration mills (manufactured by Chuo Kakoki Co., Ltd.), hammer mills (manufactured by Meiji Machine Co., Ltd.), and the like, but one is not limited thereto.

With respect to a sustained-release formulation composition obtained by the method of the present invention, in the case where there is instability when multiple agrochemical active ingredients come into contact, or in cases where agrochemical active ingredients with markedly different physical properties are joined in mixed formulations, one may further admix a sustained-release formulation composition of the present invention containing reciprocally different active ingredients.

Moreover, it is also possible to create formulations by mixing the technical products of other bactericides or insecticides with the sustained-release formulation composition of the present invention (mixed formulations), or mix the formulation of the present invention with other bactericides or insecticides for use (tank mixes), or conduct (systematic) treatment by having the dissemination times occur in tandem. There are no particular limitations on the technical products which may be used in mixed formulations, tank mixes, and systematic treatments provided that they are registered agricultural chemicals, and one may use, for example, those recorded in WO 2006/013972.

### (Sustained-release formulations)

In the case where the sustained-release formulation of the present invention is a sustained-release agrochemical formulation that uses agrochemical active ingredients, it may be applied to both arable land and non-arable land. It may be suitably used: as a seed treatment formulation in spray treatment, dust coating, sprinkling application, immersion treatment and the like onto seed potatoes and so forth; as a post-emergence treatment formulation in sprinkling treatment, top dressing treatment, and the like; as a soil treatment formulation in surface sprinkling treatment, soil incorporation treatment, soil drench treatment, soil fumigation treatment, pricking-in hole treatment, plant foot treatment, row treatment, seeding furrow treatment, seedling box treatment, seedling pot treatment, and the like; as a paddy treatment formulation in granule application, jumbo granule application, flowable application, and the like; and as other treatment formulations in space fumigation treatment, lawn treatment, and the like. Among these treatments, use as seed treatment formulation or soil treatment formulation is preferred. Application of these formulations may be conducted according to known methods and conditions.

Apart from agricultural applications, the sustained-release formulation composition of the present invention may also be used in applications selected from a group consisting of pharmaceuticals, veterinary medicines, food preservatives, and biocides. Specifically, it may be used in applications selected from a group consisting of soil pest extermination agents, termite extermination agents, clothing agents, pest extermination agents, wood pest extermination agents, bait agents, animal external parasite extermination agents, sanitary pest extermination agents, home disinfectants, marine vessel bottom coatings, fishing net and other algae prevention agents, and wood and other mildew-proofing agents.

### EXAMPLES

The present invention is described in further detail below with use of Examples, but the scope of the present invention is not limited to these Examples.

### Example 1

### (Preparation of raw material solution)

3 kg of acetamiprid (NFK-17, manufactured by Nippon Soda Co.) were introduced into 10 kg of acetone heated to 30°C, and were agitated, and dissolved. Subsequently, 6.5 kg of styrene-maleic acid polymer (SMA17352, manufactured by Sartomer Co.) were added, and dissolved. Furthermore, 0.5 kg of hydrophobic silica (Sipernat D17, manufactured by Degussa Corp.) was introduced, and dispersed. Concentration adjustment was again conducted with acetone to obtain a raw material solution A with a 30% solid content concentration.

### (Spray drying)

The raw material solution A was spray dried using a spray dryer (manufactured by Shinoda Co., Ltd.) at a heated air temperature of 100°C, air flow of 4.0 m³/min., exit temperature of 56°C, and raw material solution supply rate of 22.5 kg/hr, and the sustained-release formulation composition of the present invention (hereinafter "spray-dried product") was obtained.

### (Results)

The particle size of the spray-dried product was 30-70 µm. Acetone content was 2.48%. The content of decomposed acetamiprid was below the detection limit.

### Example 2

### (Preparation of raw material solution)

3 kg of acetamiprid (NFK-17, manufactured by Nippon Soda Co.) were introduced into 10 kg of acetone heated to 30°C, and were agitated, and dissolved. Subsequently, 6.5 kg of styrene-maleic acid polymer (SMA17352, manufactured by Sartomer Co.) were added, and dissolved. Furthermore, 0.5 kg of hydrophobic silica (Sipernat D17, manufactured by Degussa Corp.) was introduced, and dispersed. Additionally, two surfactants (Newkalgen RX-B and Newkalgen BX-C, respectively manufactured by Takemoto Oil & Fat Co.) were introduced in the amount of 0.1 kg each, concentration adjustment was again conducted with acetone, and a raw material solution B was obtained with a 30% solid content concentration.

### (Spray drying)

The raw material solution B was spray dried using a spray dryer (manufactured by Shinoda Co., Ltd.) at a heated air temperature of 100°C, air flow of 4.0 m³/min., exit temperature of 56-57°C, and raw material solution supply rate of 23.5 kg/hr.

### (Results)

The particle size of the spray-dried product was 30-80 µm. Acetone content was 2.03%. The content of decomposed acetamiprid was below the detection limit.

### Example 3

### (Preparation of raw material solution)

3.6 kg of acetamiprid (NFK-17, manufactured by Nippon Soda Co.) were introduced into 8 kg of acetone heated to 30°C, and were agitated, and dissolved. Subsequently, 7.8 kg of styrene-maleic acid polymer (SMA17352, manufactured by Sartomer Co.) were added, and dissolved. Furthermore, 0.6 kg of hydrophobic silica (Sipernat D17, manufactured by Degussa Corp.) was introduced, and dispersed. Concentration adjustment was again conducted with acetone, and a raw material solution C was obtained with a 50% solid content concentration.

### (Spray drying)

The raw material solution C was spray dried using a spray dryer (manufactured by Shinoda Co., Ltd.) at a heated air temperature of 97-101 °C, air flow of 4.0 m³/min., exit temperature of 61-62°C, and raw material solution supply rate of 15.5 kg/hr.

### (Results)

Acetone content in the spray-dried product was 3.61%. The content of decomposed acetamiprid was below the detection limit.

### Example 4

### (Spray drying)

The raw material solution C was spray dried using a spray dryer (manufactured by Shinoda Co., Ltd.) at a heated air temperature of 94-103°C, air flow of 4.0 m³/min., exit temperature of 60-61°C, and raw material solution supply rate of 22.7 kg/hr.

### (Results)

The particle size of the spray-dried product was 60-160 µm. Acetone content was 2.48%. The content of decomposed acetamiprid was below the detection limit.

### Example 5

### (Spray drying)

The raw material solution C was spray dried using a spray dryer (manufactured by Shinoda Co., Ltd.) at a heated air temperature of 95-101°C, air flow of 5.3 m³/min., exit temperature of 60-61°C, and raw material solution supply rate of 25.8 kg/hr.

### (Results)

Acetone content of the spray-dried product was 4.41%. The content of decomposed acetamiprid was below the detection limit.

### Comparative example 1

### (Reduced-pressure drying)

The raw material solution C was dried under reduced pressure using a S2KRC Kneader (manufactured by Kurimoto, Ltd.) at set temperatures of 80°C as the first half temperature and -6°C as the second half temperature, a degree of vacuum of 200 torr, a rotational frequency of 56 rpm, and a raw material solution supply rate of 3.0 kg/hr.

### (Results)

The form of the product obtained by reduced-pressure drying was flaky, and acetone content was 2.1%. The content of decomposed acetamiprid was 0.08%.

### INDUSTRIAL APPLICABILITY

According to the manufacturing method of the present invention, even with respect to a formulation composition containing an active ingredient susceptible to decomposition, it is possible to obtain a formulation composition that produces no decomposed matter, and that has low solvent content. Consequently, it is possible to stably and efficiently manufacture a sustained-release formulation composition in an industrially useful manner.

## Claims

1. A method of manufacture of sustained-release formulation composition, comprising a step of spray drying a composition that contains (1) an active ingredient, (2) a resin ingredient, (3) a solvent and (4) a release control agent, using a spray dryer and controlling the exit temperature of the spray dryer, wherein
the solvent is in a range relative to the overall composition of 40 weight % to 70 weight %;
the solvent content in the composition after spray drying is 5 mass % or less;
the composition after said spray drying does not contain decomposed matter of said active ingredient;
**characterized in that**
said (1) active ingredient is acetamiprid;
said (2) resin ingredient includes at least one type of styrene-maleic anhydride copolymer and derivative thereof which is obtained by esterification by alcohol;
said (4) release control agent is a water-soluble polymer, silicon oxide, or surfactant;and the exit temperature of said spray dryer is 56-64°C.

2. The method of manufacture of sustained-release formulation composition according to claim 1, wherein said (2) resin ingredient further includes at least one polymer selected from a group of polymers which have repeating units of rosin and derivative thereof, as well as salicylic acid and derivative thereof,
the rosin derivative is a tall rosin, rosin-modified phenol or rosin-modified maleic acid, and
the salicylic acid derivative is a linear polysalicylate.

3. The method of manufacture of sustained-release formulation composition according to claim 1, wherein said silicon oxide is hydrophobic silica.

4. The method of manufacture of sustained-release formulation composition according to claim 1, wherein average particle size of the composition after said spray drying is 100 µm or less.

5. The method of manufacture of sustained-release formulation composition according to claim 1, wherein said (3) solvent is dichloroethane, acetone or methanol.

6. The method of manufacture of sustained-release formulation composition according to claims 1, wherein the sustained-release formulation composition is in a compatible state or matrix state.

## Patentansprüche

1. Verfahren zur Herstellung einer Retardformulierungszusammensetzung, umfassend einen Schritt eines Sprühtrocknens einer Zusammensetzung, die (1) einen Wirkstoff, (2) einen Harzbestandteil, (3) ein Lösungsmittel und (4) ein Freisetzungskontrollmittel enthält, unter Verwendung eines Sprühtrockners und wobei die Austrittstemperatur des Sprühtrockners kontrolliert wird, wobei
das Lösungsmittel in einem Bereich von 40 Gewichts-% bis 70 Gewichts-% bezüglich der Gesamtzusammensetzung ist;
der Lösungsmittelgehalt in der Zusammensetzung nach Sprühtrocknen 5 Massen-% oder weniger ist;
die Zusammensetzung nach dem Sprühtrocknen kein zersetztes Material des Wirkstoffs enthält;
**dadurch gekennzeichnet, dass**
der (1) Wirkstoff Acetamiprid ist;
der (2) Harzbestandteil mindestens eine Art von Styrol-Maleinsäureanhydrid-Copolymer und Derivat davon, das durch Veresterung durch Alkohol erhalten ist, einschließt;
das (4) Freisetzungskontrollmittel ein wasserlösliches Polymer, ein Siliziumoxid oder ein Tensid ist; und die Austrittstemperatur des Sprühtrockners 56-64 °C ist.

2. Verfahren zur Herstellung einer Retardformulierungszusammensetzung nach Anspruch 1, wobei der (2) Harzbestandteil ferner mindestens ein Polymer einschließt, ausgewählt aus einer Gruppe von Polymeren, die Wiederholungseinheiten von Kolophonium und einem Derivat davon, sowie Salicylsäure und einem Derivat davon, aufweisen,
wobei das Kolophoniumderivat ein Tallkolophonium, ein Kolophoniummodifiziertes Phenol oder eine Kolophonium-modifizierte Maleinsäure ist und
wobei das Salicylsäurederivat ein lineares Polysalicylat ist.

3. Verfahren zur Herstellung einer Retardformulierungszusammensetzung nach Anspruch 1, wobei das Siliziumoxid hydrophobe Kieselsäure ist.

4. Verfahren zur Herstellung einer Retardformulierungszusammensetzung nach Anspruch 1, wobei die durchschnittliche Partikelgröße der Zusammensetzung nach dem Sprühtrocknen 100 µm oder weniger ist.

5. Verfahren zur Herstellung einer Retardformulierungszusammensetzung nach Anspruch 1, wobei das (3) Lösungsmittel Dichlorethan, Aceton oder Methanol ist.

6. Verfahren zur Herstellung einer Retardformulierungszusammensetzung nach Anspruch 1, wobei die Retardformulierungszusammensetzung in einem kompatiblen Zustand oder einem Matrix-Zustand ist.

## Revendications

1. Procédé de fabrication d'une composition de formulation à libération prolongée, comprenant une étape de séchage par pulvérisation d'une composition qui contient (1) un ingrédient actif, (2) un ingrédient de résine, (3) un solvant et (4) un agent de régulation de libération, à l'aide d'un sécheur par pulvérisation et de régulation de la température de sortie du sécheur par pulvérisation, dans lequel
le solvant est dans une plage par rapport à la composition globale de 40 % en poids à 70 % en poids ;
la teneur en solvant dans la composition après séchage par pulvérisation est de 5 % en masse ou moins ;
la composition après ledit séchage par pulvérisation ne contient pas de matière décomposée dudit ingrédient actif ;
**caractérisé en ce que**
ledit (1) ingrédient actif est l'acétamipride ;
ledit (2) ingrédient de résine comporte au moins un type de copolymère d'anhydride maléique-styrène et un dérivé de celui-ci qui est obtenu par estérification par alcool ; ledit (4) agent de régulation de libération est un polymère soluble dans l'eau, de l'oxyde de silicium, ou un tensioactif ; et la température de sortie dudit sécheur par pulvérisation est de 56 à 64 °C.

2. Procédé de fabrication d'une composition de formulation à libération prolongée selon la revendication 1, dans lequel ledit (2) ingrédient de résine comporte en outre au moins un polymère choisi dans un groupe de polymères qui ont des motifs répétés de colophane et d'un dérivé de celui-ci, ainsi que de l'acide salicylique et un dérivé de celui-ci,
le dérivé de colophane est la colophane d'huile de pin, le phénol modifié par colophane ou l'acide maléique modifié par colophane, et
le dérivé d'acide salicylique est un polysalicylate linéaire.

3. Procédé de fabrication d'une composition de formulation à libération prolongée selon la revendication 1, dans lequel ledit oxyde de silicium est la silice hydrophobe.

4. Procédé de fabrication d'une composition de formulation à libération prolongée selon la revendication 1, dans lequel une taille moyenne de particule de la composition après ledit séchage par pulvérisation est de 100 µm ou moins.

5. Procédé de fabrication d'une composition de formulation à libération prolongée selon la revendication 1, dans lequel ledit (3) solvant est le dichloroéthane, l'acétone ou le méthanol.

6. Procédé de fabrication d'une composition de formulation à libération prolongée selon la revendication 1, dans lequel la composition de formulation à libération prolongée est dans un état compatible ou un état de matrice.
